# EUROPÄISCHE PATENTSCHRIFT

(11) **EP 1 356 987 B1**
(45) Veröffentlichungstag und Bekanntmachung des Hinweises auf die Patenterteilung: **13.07.2005**
(21) Anmeldenummer: 03003643.8
(22) Anmeldetag: 18.02.2003
(51) Int. Cl.: B60N 2/48, B60N 2/24

(54) **Variable Kopfstütze für quer zur Fahrtrichtung eingebaute Sitze**
Variable headrest for seats built-in transversely to the vehicle's direction
Appui-tête variable pour sièges incorporés transversalement à la direction de conduite

(30) Priorität: 27.04.2002 DE 10218961
(43) Veröffentlichungstag der Anmeldung: 29.10.2003
(73) Patentinhaber: Rheinmetall Landsysteme GmbH, 24159 Kiel (DE)
(72) Erfinder: Böttcher, Ralf, 24107 Kiel (DE); Pittinger, Hellmut, 82319 Starnberg (DE)
(74) Vertreter: Dietrich, Barbara, Dipl.-Ing.

(56) Entgegenhaltungen:
- EP-A- 0 142 822
- EP-A- 0 463 502
- DE-A- 3 039 934
- DE-A- 4 116 759
- DE-A- 19 653 516
- DE-U- 20 016 359
- DE-U- 29 811 734
- FR-A- 2 768 093
- FR-A- 2 779 394
- GB-A- 300 391
- US-A- 3 851 919
- US-A- 4 971 393
- US-A- 5 370 446
- PATENT ABSTRACTS OF JAPAN vol. 006, no. 267 (M-182), 25. Dezember 1982 (1982-12-25) & JP 57 158128 A (NISSAN JIDOSHA KK), 29. September 1982 (1982-09-29)

## Beschreibung

Die Erfindung bezieht sich auf Kopfstützen als Kopfschutz von sitzenden Personen in gepanzerten Fahrzeugen gegen die Wirkung von starken Beschleunigungen, die zum Beispiel bei einem Aufprall des tranportierenden Fahrzeugs auf ein Hindernis bezüglich des Kopfes und der Halswirbelsäule des Passagiers auftreten können.

Rückhalteeinrichtungen und Kopfstützen sind in verschiedenen Verkehrsmitteln in der Regel an Sitzen oder Sitzeinheiten angeordnet, die in Fahrtrichtung oder gegen die Fahrtrichtung eingebaut sind.

Sitze für den Transport von Personen können auch quer zur Fahrtrichtung im Fahrzeug angeordnet sein, insbesondere bei militärischen Fahrzeugen.

Bei Queranordung von Sitzen treten bei einem Crash bei Vorwärts- oder Rückwärtsfahrt ebenfalls erhebliche Beschleunigungen auf den Körper des dort sitzenden Besatzungsmitglieds auf, deren Wirkung zu Verletzungen führen kann und die unschädlich gemacht werden müssen.

Das alleinige Zurückhalten des Körpers durch ein Gurtsystem führt jedoch nicht zu einer ausreichenden Absicherung der Besatzung, da die Schleuderwirkung auf die Halswirbelsäule bei zurückgehaltenem Rumpf ohne ein angepaßtes Kopfrückhaltesystem sogar noch verstärkt wird. Erschwerend kommt bei Anwendungen in Gefechtsfahrzeugen hinzu, dass der häufig auf dem Kopf getragene Schutzhelm bezüglich Gewicht und Geometrie mit berücksichtigt werden muß.

Als Beispiel für ein militärisches Fahrzeug wird die DE 197 17 782 C2 erwähnt, worin eine Kopfstütze an einem in Fahrtrichtung eingebauten Sitz gezeigt wird.

Den Stand der üblichen Kopfstützentechnik zeigt DE 20002484 U1, in der eine motorische sich an einen Bediener anpassende Stütze vorgestellt wird. In DE 197 38 201 C2 wird die Kopfstütze im Fall einer starken Verzögerung automatisch nach vorn an den Kopf geneigt und arretiert.

Aus der DE 30 39 934 A1, welches den nächst liegenden Stand der Technik darstellt, ist eine Kopfstütze für einen Sitz eines Kraftfahrzeuges offenbart, bei der die Polsterteile in einer Ruhestellung mit der Frontseite der Kopfstütze bündig sind. Dadurch wird ein ungehindertes Ein- und Aussteigen sowie eine ungestörte Änderung der Sitzhaltung des Benutzers möglich. Hat der Benutzer seine für ihn günstige Haltung eingenommen, können die Polsterteile zur Erfüllung eines optimalen Schutzes unabhängig von der Höheneinstellung der Kopfstütze in eine Gebrauchtstellung geschwenkt werden. Jedes Polsterteil ist mehrteilig ausgebildet und kann in der Gebrauchtstellung nach vorne ausziehbar sein.

Alle diese Stützen sind nur für den Schutz gegen Beschleunigung in oder gegen die Fahrtrichtung und für entsprechende Sitze ausgelegt. Deshalb wird praktisch nur das freie Schleudern des Kopfes in oder gegen die Fahrtrichtung begrenzt und abgefangen. Seitliches Abfangen des Kopfes wird zum Teil mit kurzen seitlichen Formstücken an der Kopfstütze zu erreichen versucht, im wesentlichen um ein Herausdrehen des Kopfes aus der Kopfstütze zu verhindern. Da das Einbauen von Sitzen quer zur Fahrtrichtung vorwiegend wegen des ungünstigen Verhaltens bei einem Frontalcrash vermieden wird, sind dafür geeignete Kopfstützen ungebräuchlich. Bei militärischen Fahrzeugen läßt sich jedoch die quer zur Fahrtrichtung einsitzende Besatzung oft nicht vermeiden. Bekannt sind auch spezielle Personen-Gurtsysteme aus dem Luftfahrtbereich, die für den Landfahrzeugbereich angepasst und erprobt werden können.

Die Nachteile der bekannten Lösungen liegen im Detail darin, dass bei weit nach vorn ragenden Seitenflanken der Kopfstütze die seitliche Sicht des Benutzers stark eingeschränkt wird und der benötigte Bauraum für diese Seitenflanken zu groß ist.

Aufgabe der Erfindung ist die Verbesserung des Kopfschutzes für den quer zur Fahrtrichtung in einem militärischen Landfahrzeug sitzenden Mitfahrer.

Diese Aufgabe wird durch die Merkmale des Anspruchs 1 gelöst. Weitere Merkmale ergeben sich aus den Unteransprüchen.

Erfindungsgemäß wird eine variable Kopfstütze für eine quer zur Fahrtrichtung sitzende Person angeordnet, die den Kopf im Nackenbereich und vor allem nach beiden Seiten und damit in und gegen die Fahrtrichtung abstützt. Da die zu schützende Person auch im angeschnallten Zustand ein gewisses Vorbeugen nach vorn ausführen muß, sind die Seitenflanken der Kopfstütze relativ weit nach vorn auszuführen, damit der Kopf nicht aus der Stütze heraus bewegt wird. Damit die seitliche Sicht nicht zu sehr eingeschränkt wird, sind die Seitenflanken durchbrochen und gestatten die Bedienersicht nach links und rechts totz der weit ausladenden und schützenden Seitenflanken. Außerdem sind die Seitenflanken der Kopfstütze beweglich gelagert, so daß sie bei Nichtgebrauch nach oben in eine Bereitschaftsposition geschwenkt werden können.

Die Vorteile der erfindungsgemässen Ausbildung der Kopfstütze liegen insbesondere darin, daß zwei Funktionsstellungen von der im Fahrzeug eingebauten Stütze eingenommen werden können. Bei Bedarf, das ist im wesentlichen bei Mitfahrt im Sitzen, ist die seitliche Stütze herausgeklappt. Ansonsten, das ist im wesentlichen im Stillstand des Fahrzeugs oder bei stehender Position des Bedieners zum Beobachten oder Wirken über Luke, wird die Stütze weggeklappt in die Bereitschaftsposition, so daß sie keinen Einbauraum belegt und ein Hindernis vermieden wird, womit der freigemachte Raum für eine bessere Beweglichkeit der Besatzung und andere Vorteile genutzt wird. Bei Fahrzeugfahrt in der vorgeklappten Stellung tritt die Schutzwirkung für die Besatzung voll in Funktion.

Wegen der offenen Bauweise der Kopfstützen als Rahmen-Kopfstützen und der durchbrochenen Seitenflanken wird die seitliche Sichtbehinderung minimiert und das psychologische Wohlbefinden der Besatzung verbessert.

Ausführungsbeispiele der Erfindung sind in den Zeichnungen schematisch dargestellt und werden im folgenden näher beschrieben. Es zeigen:
- Figur 1:: eine Gesamtansicht der Kopfstütze
- Figur 2:: eine Draufsicht der Kopfstütze
- Figur 3:: eine Seitenansicht der Kopfstütze
- Figur 4:: eine Seitenansicht der Kopfstütze Bereitschaftsstellung

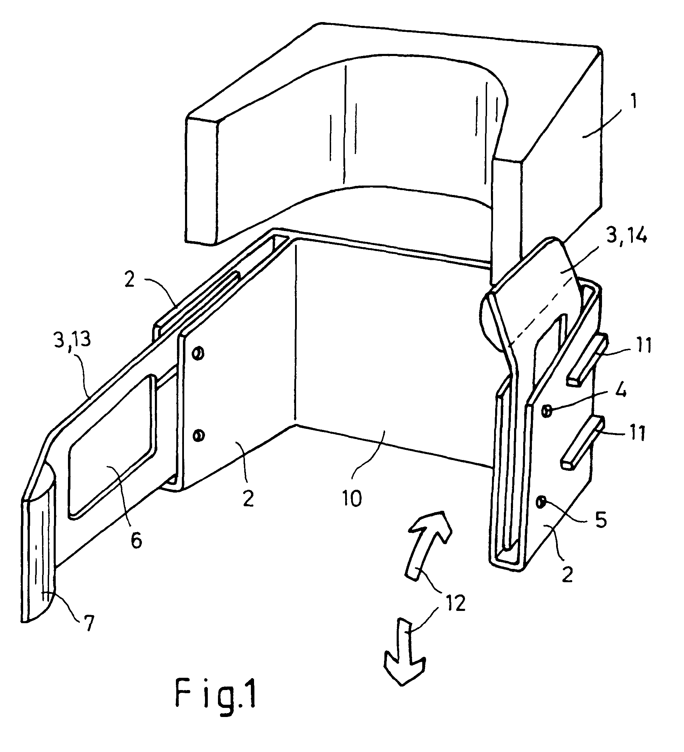

Figur 1 zeigt die Kopfstütze mit den drei Hauptbauelementen, einem Montagerahmen 10, der an einem nicht näher dargestellten Fahrzeug befestigt wird, zwei beweglichen Seitenwangen 3 und adaptiven Polsterelementen 1 und 7. Der Montagerahmen 10 ist so ausgebildet, daß die zwei beweglichen Seitenwangen 3 in einem seitlich doppelwandig 2 ausgeführten Montagerahmen 10 aufgenommen und gelagert werden. Montagerahmen 10 und Seitenteile 2 werden mit Stegen 11 verstärkt für die Aufnahme einer möglichen speziellen Crashbelastung. Die Seitenwangen 3 können in Richtung 12 nach oben oder nach unten geklappt werden in die Stellungen 13 oder 14.

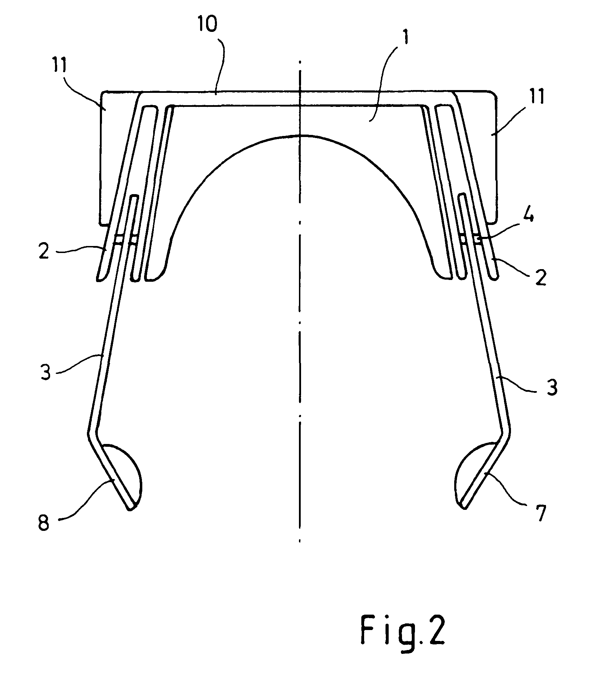

Figur 2 zeigt das eingebaute adaptive Polsterelement 1, welches in Figur 1 nach oben herausgenommen dargestellt ist. Die Seitenwangen 3 werden mit Lagerstiften 4, 5, die jeweils in den doppelten Seitenteilen 2 des Montagerahmens 10 befestigt sind, gelagert.

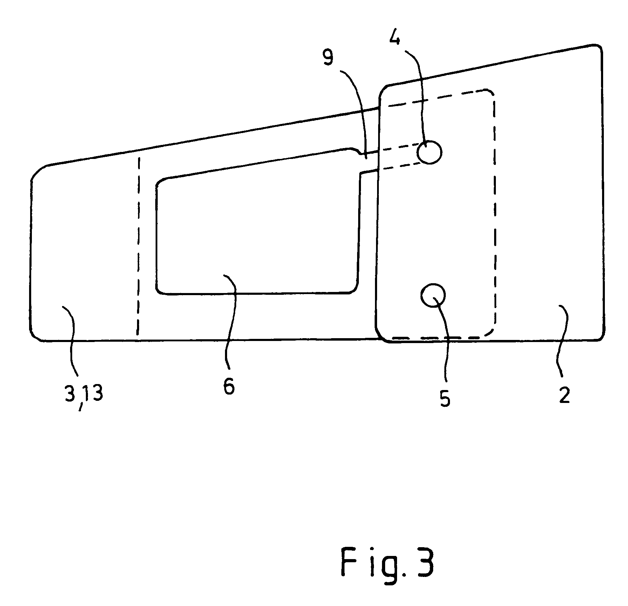

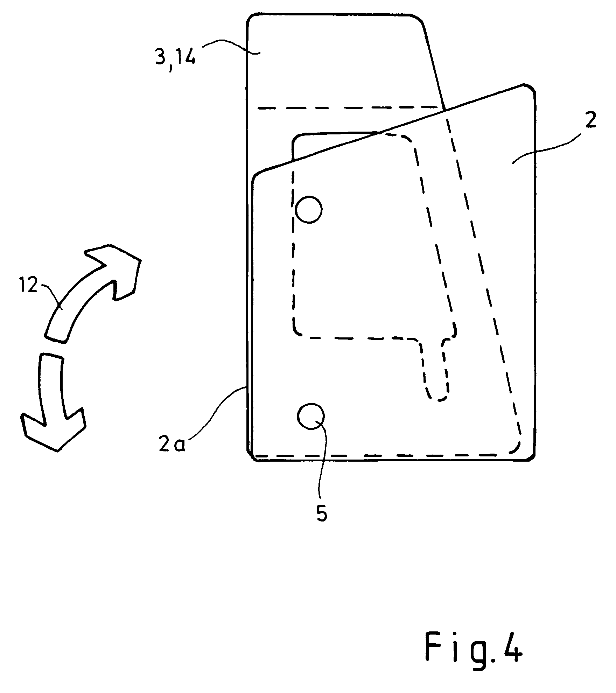

Die Figuren 3, 4 stellen die beiden Funktionsstellungen 13, 14 der Seitenwangen 3 dar. Lager- und Drehpunkt 5 ist ein im Seitenteil 2 befestigter Bolzen, um den die Seitenwange 3 schwenkt, ebenso wie Fixpunkt und Bolzen 4, welcher in einem ausgeschnittenen Fenster 6 einschliesslich Aussparung 9 der Seitenwange 3 die Bewegung der Seitenwange als Anschlag so begrenzt, daß die Seitenwange 3 in der Stellung 14 mit der Vorderkante 2a des Seitenteils 2 bündig liegt. In Stellung 13 ist die Seitenwange 3 nach vorn herausgeklappt und wird in dieser Lage durch Bolzen 4 und Aussparung 9 festgehalten.

Die drehbaren Seitenwangen 3 sind im Drehpunkt 5 so gelagert, daß sie nach dem Hochklappen in Stellung 14 annähernd bündig mit der Vorderkante 2a des feststehenden Seitenteils 2 des Montagerahmens 10 fixiert werden, zum Beispiel mittels Schwerpunktausbildung von Teil 3. Eine exakte Führung der Seitenwangen 3 in den Seitenteilen 2 wird zusätzlich durch die Fixpunkte 4 auf den Seitenteilen 2 erreicht. Die Fixpunkte 4 können als einstellbare Bolzen ausgeführt werden, die auch ein Einrasten in der heruntergeklappten Stellung 13 ermöglichen. Die Seitenwangen 3 sind so ausgeformt, daß sie mittels Abwinkelung 8 die ergonomischen Anforderungen für die Benutzung mit Schutzhelm erfüllen, und auch verhindern, daß der Kopf des Benutzers bei einem Crash aus der Kopfstütze heraus gedreht wird. Ergänzend zu der Abwinkelung 8 werden speziell ausgebildete Seitenpolster 7 an den Stirnseiten der Seitenwangen 3 auf den Innenseiten angebracht.

Die Seitenwangen 3 sind mittels Fenster 6 großflächig durchbrochen, um eine möglichst uneingeschränkte Sicht des Benutzers zu beiden Seiten sicherzustellen. Der Durchbruch 6 in den Seitenwangen 3 setzt sich in der Aussparung 9 fort, die in Kombination mit dem Führungsbolzen 4 die Beweglichkeit der Seitenwange 3 im Seitenteil 2 sichert.

Die adaptive Polsterung 1 der Kopfstütze ist herausnehmbar und kann dem jeweiligen Einsatzbereich hinsichtlich zum Beispiel Elastizität angepaßt werden. Durch die Aufteilung der Kopfstütze in drei wesentliche Bauelemente 10, 3, 1 ist deren Fertigung aus unterschiedllichem Material leicht realisierbar. So kann der Montagerahmen 10 aus besonders steifem Material gefertigt werden, während die Seitenwangen 3 aus hochfestem aber definiert elastischem oder verformbarem Material bestehen können. Die Polsterung 1 kann aus einem Schnellwechselsystem gebildet werden und in Qualität und Dämpfung angepasst werden.

### Bezugszeichenliste

- 1: Polsterelement
- 2: Seitenteil
- 2a: Vorderkante
- 3: Seitenwagen
- 4: Lagerstift
- 5: Lagerstift
- 6: Fenster / Durchbruch
- 7: Polsterelement
- 8: Abwinkelung
- 9: Aussparung
- 10: Montagerahmen
- 11: Steg
- 12: Richtung
- 13: Stellung
- 14: Stellung

## Patentansprüche

1. Vorrichtung zum Schutz gegen die Einwirkung einer starken Beschleunigung auf die Besatzung eines gepanzerten Fahrzeugs insbesondere bei einem Aufprall des Fahrzeugs infolge eines Unfalls und insbesondere zum Schutz des Kopfes und der Halswirbelsäule der im Fahrzeug quer zur Fahrtrichtung sitzenden Bediener mittels Anbringung von fahrzeugfesten Schutzelementen für den Kopf der zu schützenden Person oberhalb und zugeordnet zu einem fahrzeugfesten Sitz, wobei eine Kopfstütze aus einem am Fahrzeug in Kopfhöhe befestigten Montagerahmen (10), zwei beweglichen Seitenwangen (3) und adaptiver Polsterung (1, 7) besteht und die Seitenwangen im Montagerahmen (10) befestigt sind und mittels Lagerungen (4, 5) aus der Funktionsstellung ausgeklappt (13) in eine Bereitschaftsstellung hochgeschwenkt (14) und umgekehrt geklappt werden können, wobei je eine Seitenwange (3) mittig in doppelwandig ausgeführten Auskragungen (2) an beiden Seiten eines Montagerahmens (10) verschiebbar und um 90 Grad drehbar mittels Lagerpunkten (5) und einem arretierenden Anschlag (4) gelagert ist.

2. Vorrichtung nach Anspruch 1
**dadurch gekennzeichnet,**
**daß** die Seitenwange (3) mittels eines Durchbruchs (6) und einer damit zusammenhängenden Aussparung (9) sowie mittels Bolzen (4, 5), welche in den doppelwandigen Auskragungen (2) des Montagerahmens (10) befestigt sind und welche durch den Durchbruch (6) ragen, verschiebbar und drehbar gelagert ist.

3. Vorrichtung nach einem der oben genannten Ansprüche
**dadurch gekennzeichnet,**
**daß** schwenkbare Seitenwangen (3) mit einem Durchbruch (6) als Fenster für die Seitensicht des jeweils dahinterpositionierten Auges einer zu schützenden Person versehen sind.

4. Vorrichtung nach einem der oben genannten Ansprüche
**dadurch gekennzeichnet,**
**daß** Stege (11) am Montagerahmen (10) angebracht sind, um den Aufbau gegen auftretende Crash-Beschleunigungen ausreichend zu verstarken.

5. Vorrichtung nach einem der oben genannten Ansprüche
**dadurch gekennzeichnet,**
**daß** leicht austauschbare Polsterlemente (1, 7) am Montagerahmen (10) und an der Seitenwange (7) angebracht sind, welche die Kopfstütze gegen den Kopf der zu schützenden Person abpolstern und je nach Einsatzfall und aus hygienischen Gründen ausgetauscht werden.

6. Vorrichtung nach einem der oben genannten Ansprüche
**dadurch gekennzeichnet,**
**daß** die Seitenwangen (3) mittels einer entsperrbaren Verriegelung in der Funktionsstellung ausgeschwenkt (13) gehalten werden, welche nur mittels eines Auslösemechanismus entsperrt werden kann vorn Benutzer, sofern die Stellung ausgeschwenkt vorlaufend oder bei Fahrtantritt eingenommen wurde.

7. Vorrichtung nach einem der oben genannten Ansprüche
**dadurch gekennzeichnet,**
**daß** die Stellung der Seitenwangen (3) mittels eines Lagesensors überwacht und als Meldung an den Fahrzeugführer mitgeteilt wird zur Überwachung insbesondere in Verbindung mit einem Sitzkontakt für die Meldung eines belegten Sitzplatzes.

8. Vorrichtung nach einem der oben genannten Ansprüche
**dadurch gekennzeichnet,**
**daß** die Seitenwangen (3) im vorderen Bereich so ausgeformt sind, daß sie mittels Abwinkelung (8) und Abpolsterung (7) die ergonomischen Anforderungen für die Benutzung mit Schutzhelm ohne Behinderung erfüllen und gleichzeitig verhindern, dass der Kopf des Benutzers bei einem Crash aus der Kopfstütze herausgedreht wird.

9. Vorrichtung nach einem der oben genannten Ansprüche
**dadurch gekennzeichnet,**
**daß** durch den modularen Aufbau der Kopfstütze die Materialien der Teile (1, 3, 7, 10) so gewählt werden können, daß sie im Einzelnen bezüglich der Forderungen nach geringem Gewicht, hoher Steifigkeit und Festigkeit oder gezielt bezüglich der stoßverringernden Nachgiebigkeit geeignet sind.

## Claims

1. Device for protecting against the effect of severe acceleration on the crew of an armoured vehicle, in particular in the case of an impact of the vehicle as a consequence of an accident and, in particular, for protecting the head and cervical vertebra of the operators sitting in the vehicle transversely to the direction of travel, by means of fitting protection elements, which are fixed on the vehicle, for the head of the person to be protected above and assigned to a seat, which is fixed on the vehicle, a headrest comprising a mounting frame (10), which is fastened to the vehicle at head height, two movable side cheeks (3) and adaptive cushioning (1, 7), the side cheeks being fastened in the mounting frame (10) and being able to be unfolded by means of mountings (4, 5) from the functional position and pivoted up into a standby position (14) and being able to be folded in the reverse direction, with each side cheek (3) being displaceable centrally in projections (2) of double-walled design on both sides of a mounting frame (10) and being mounted in a manner such that it can be rotated through 90 degrees by means of bearing points (5) and an arresting stop (4).

2. Device according to Claim 1, **characterized in that** the side cheek (3) is mounted displaceably and rotatably by means of an aperture (6) and a cutout (9) associated therewith and by means of bolts (4, 5) which are fastened in the double-walled projections (2) of the mounting frame (10) and which protrude through the aperture (6).

3. Device according to one of the abovementioned claims, **characterized in that** pivotable side cheeks (3) are provided with an aperture (6) as a window for the side view for the eye, which is positioned behind it in each case, of a person to be protected.

4. Device according to one of the abovementioned claims, **characterized in that** webs (11) are attached to the mounting frame (10) in order to sufficiently reinforce the construction against crash accelerations which occur.

5. Device according to one of the abovementioned claims, **characterized in that** easily replaceable cushion elements (1, 7) are attached to the mounting frame (10) and to the side cheek (7) and cushion the headrest against the head of the person to be protected and are replaced depending on the situation in which they are used and for hygiene reasons.

6. Device according to one of the abovementioned claims, **characterized in that** the side cheeks (3) are held pivoted out in the functional position (13) by means of an unlockable lock which can only be unlocked by the user by means of a release mechanism if the pivoted-out position has been adopted temporarily or at the beginning of the journey.

7. Device according to one of the abovementioned claims, **characterized in that** the position of the side cheeks (3) is monitored by means of a position sensor and is imparted to the vehicle driver as a notification for monitoring purposes, in particular in conjunction with a seat contact for notifying that a seat is occupied.

8. Device according to one of the abovementioned claims, **characterized in that** the side cheeks (3) are formed in the front region in such a manner that, by means of the angled portion (8) and cushioning (7), they satisfy the ergonomic requirements for use with a protective helmet without obstruction and at the same time prevent the user's head from rotating out of the headrest in the event of a crash.

9. Device according to one of the abovementioned claims, **characterized in that** the modular construction of the headrest enables the materials of the parts (1, 3, 7, 10) to be chosen in such a manner that they are suitable in particular with regard to the requirements for low weight, high stiffness and strength or in a specific manner with regard to the impact-reducing flexibility.

## Revendications

1. Dispositif de protection contre l'effet d'une forte accélération sur les occupants d'un véhicule blindé, en particulier lors d'une collision du véhicule par suite d'un accident et en particulier pour la protection de la tête et de la colonne cervicale des occupants assis dans le véhicule transversalement à la direction de conduite, par l'installation d'éléments de protection fixes dans le véhicule pour la tête de la personne à protéger au-dessus et en combinaison avec un siège fixe dans le véhicule, dans lequel un appuie-tête se compose d'un cadre de montage (10) fixé dans le véhicule à hauteur de tête, de deux joues latérales mobiles (3) et d'un capitonnage adaptable (1, 7) et les joues latérales sont fixées dans le cadre de montage (10) et peuvent, au moyen d'appuis (4, 5), être relevées par pivotement de la position déployée d'utilisation (13) à une position de rangement (14) et rabattues en sens inverse, dans lequel chaque joue latérale (3) peut coulisser au milieu d'ailes à double paroi (2) formées de part et d'autre d'un cadre de montage (10) et est appuyée en pouvant pivoter de 90° au moyen de points d'appui (5) et d'une butée d'arrêt (4).

2. Dispositif selon la revendication 1, **caractérisé en ce que** la joue latérale (3) est appuyée de façon coulissante et pivotante au moyen d'une découpe (6) et d'une fente (9) communiquant avec celle-ci ainsi qu'au moyen de boulons (4, 5) qui sont fixés dans les ailes à double paroi (2) du cadre de montage (10) et qui passent à travers la découpe (6).

3. Dispositif selon l'une quelconque des revendications précédentes, **caractérisé en ce que** les joues latérales pivotantes (3) sont pourvues d'une découpe (6) formant une fenêtre pour la vision latérale de l'oeil respectivement voisin d'une personne à protéger.

4. Dispositif selon l'une quelconque des revendications précédentes, **caractérisé en ce que** des nervures (11) sont placées sur le cadre de montage (10) pour renforcer suffisamment la structure contre des accélérations survenant lors d'une collision.

5. Dispositif selon l'une quelconque des revendications précédentes, **caractérisé en ce que** des éléments de capitonnage aisément remplaçables (1, 7) sont placés sur le cadre de montage (10) et sur la joue latérale (7), qui garnissent l'appuie-tête contre la tête de la personne à protéger et qui sont remplacés après chaque utilisation et pour des raisons d'hygiène.

6. Dispositif selon l'une quelconque des revendications précédentes, **caractérisé en ce que** les joues latérales (3) peuvent être maintenues en position déployée dans la position d'utilisation (13) au moyen d'un verrouillage déverrouillable, qui ne peut être déverrouillé qu'au moyen d'un mécanisme de libération par l'utilisateur, dans la mesure où la position déployée a été occupée provisoirement ou au départ d'un trajet.

7. Dispositif selon l'une quelconque des revendications précédentes, **caractérisé en ce que** la position des joues latérales (3) est surveillée au moyen d'un détecteur de position et est communiquée au conducteur du véhicule sous la forme d'un message de la surveillance en particulier en liaison avec un contact de siège servant à signaler un siège occupé.

8. Dispositif selon l'une quelconque des revendications précédentes, **caractérisé en ce que** les joues latérales (3) sont conformées dans leur partie antérieure de telle façon qu'elles respectent, au moyen des parties pliées (8) et du capitonnage (7), les exigences ergonomiques pour une utilisation avec un casque de protection sans gêne et qu'elles empêchent en même temps que la tête de l'utilisateur soit entraînée hors de l'appuie-tête lors d'une collision.

9. Dispositif selon l'une quelconque des revendications précédentes, **caractérisé en ce que**, grâce à la construction modulaire de l'appuie-tête, les matériaux des pièces (1, 3, 7, 10) peuvent être choisis de telle façon qu'ils conviennent individuellement en ce qui concerne les exigences de faible poids, de rigidité et de résistance élevées ou de façon adéquate en ce qui concerne leur souplesse pour l'atténuation des chocs.
